# EUROPÄISCHE PATENTSCHRIFT

(11) **EP 1 028 235 B1**
(45) Veröffentlichungstag und Bekanntmachung des Hinweises auf die Patenterteilung: **01.09.2004**
(21) Anmeldenummer: 99120697.0
(22) Anmeldetag: 19.10.1999
(51) Int. Cl.: F01N 3/023, F01N 9/00, F02D 41/02

(54) **Verfahren zur Steuerung einer Brennkraftmaschine mit einem Abgasnachbehandlungssystem**
Method for controlling an internal combustion engine with an exhaust gas after-treatment system
Procédé de commande d'un moteur à combustion interne avec un système de traitement ultérieur des gaz d'échappement

(30) Priorität: 15.02.1999 DE 19906287
(43) Veröffentlichungstag der Anmeldung: 16.08.2000
(73) Patentinhaber: ROBERT BOSCH GMBH, 70442 Stuttgart (DE)
(72) Erfinder: Leuz, Marcus, 74214 Schoental-Oberkessach (DE)

(56) Entgegenhaltungen:
- EP-A- 0 115 722
- EP-A- 0 402 705
- US-A- 4 881 369
- US-A- 5 050 376

## Beschreibung

### Stand der Technik

Die Erfindung geht aus von einem Verfahren zur Steuerung eines Abgasnachbehandlungssystems einer Brennkraftmaschine nach der Gattung des unabhängigen Anspruchs.

Aus der EP 402 705 A1 ist ein Verfahren zum Betreiben eines Partikelfilters bekannt geworden, der im Abgasbereich einer Brennkraftmaschine angeordnet ist. Vorgesehen sind ein erster und und zweiter Zustand des Partikelfilters. Im ersten Zustand wird der Partikelfilter mit den im Abgas enthaltenen Rußpartikeln beladen. Im zweiten Zustand ist die Regeneration des Partikelfilters vorgesehen. Die beiden Zustände unterscheiden sich in der am Partikelfilter auftretenden Druckdifferenz. Der zweite Zustand wird erreicht, wenn der Differenzdruck einen vorgegebenen Difierenzdruck-Schwellenwert übersteigt. Nach der Regeneration wird zum einen überprüft, ob die während der Regeneration erreichte Spitzentemperatur im Partikelfilter innerhalb eines vorgegebenen Temperaturintervalls gelegen hat. Sofern dies nicht der Fall ist, wird zum anderen überprüft, ob die Spitzentemperatur unterhalb der unteren Begrenzungstemperatur des Temperaturintervalls gelegen hat. Sofern dies der Fall war, wird der vorgegebenen Differenzdruck-Schwellenwert angehoben, sodass die Regeneration erst bei einem höheren Differenzdruck-Schwellenwert begonnen wird. Mit dieser Maßnahme soll die Spitzentemperatur während der nächsten Regeneration erhöht werden. Sofern das Ergebnis dieser Abfrage negativ ist, die während der Regeneration aufgetretene Spitzentemperatur also oberhalb des oberen Begrenzungstemperatur des Temperaturintervalls gelegen hat, wird der vorgegebenen Differenzdruck-Schwellenwert abgesenkt. Mit dieser Maßnahme soll die Spitzentemperatur während der nächsten Regeneration abgesenkt werden.

Die Erhöhung des Druckdifferenz-Schwellenwerts ist weiterhin vorgesehen, wenn die Spitzentemperatur während der Regeneration zwar innerhalb des vorgegebenen Temperaturintervalls gelegen hat, die nach der Regeneration festgestellte Druckdifferenz aber zu hoch war. Auch in diesem Fall wird der vorgegebenen Differenzdruck-Schwellenwert erhöht mit dem Ziel, während der nächsten Regeneration ein erhöhtes Temperatumiveau für eine intensivere Regeneration zu erreichen.

In denjenigen Fällen, in denen der vorgegebene Differenzdruck-Schwellenwert entweder erhöht oder abgesenkt wurde, wird festgestellt, ob der neue vorzugebende Differenzdruck-Schwellenwert entweder unterhalb einer vorgegebenen unteren Grenze oder oberhalb einer vorgegebenen oberen Grenze liegt. In beiden Fällen wird eine abnormale Situation erkannt. Weitere Maßnahmen sind nicht vorgesehen. Nach dem Erkennen der abnormalen Situation tritt wieder der normale Programmablauf auf.

Der Erfindung liegt die Aufgabe zugrunde, ein Verfahren zur Steuerung eines Abgasnachbehandlungssystems einer Brennkraftmaschine anzugeben, das möglichst übersichtlich ist. Insbesondere soll das Verfahren einfach zu applizieren und übersichtlich strukturiert sein.

Die Aufgabe wird durch die im unabhängigen Anspruch angegebenen Merkmale gelöst.

### Vorteile der Erfindung

Das erfindungsgemäße Verfahren sieht wenigstens drei Zustände des Abgasnachbehandlungssystems vor, die sich durch wenigstens einen Wert wenigstens einer Betriebskenngröße unterscheiden. Beim Übergang vom zweiten in den ersten Zustand wird ein erstes Sonderbetriebsprogramm und beim Übergang vom dritten in den zweiten Zustand ein zweites Sonderbetriebsprogramm durchgeführt.

Mit dem erfindungsgemäße Verfahren ist eine einfache Steuerung des Abgasnachbehandlungssystems der Brennkraftmaschine möglich. Vorteilhafte Ausgestaltungen und Weiterbildungen des erfindungsgemäßen Verfahrens ergeben sich aus abhängigen Ansprüchen und aus der folgenden Beschreibung.

### Zeichnung

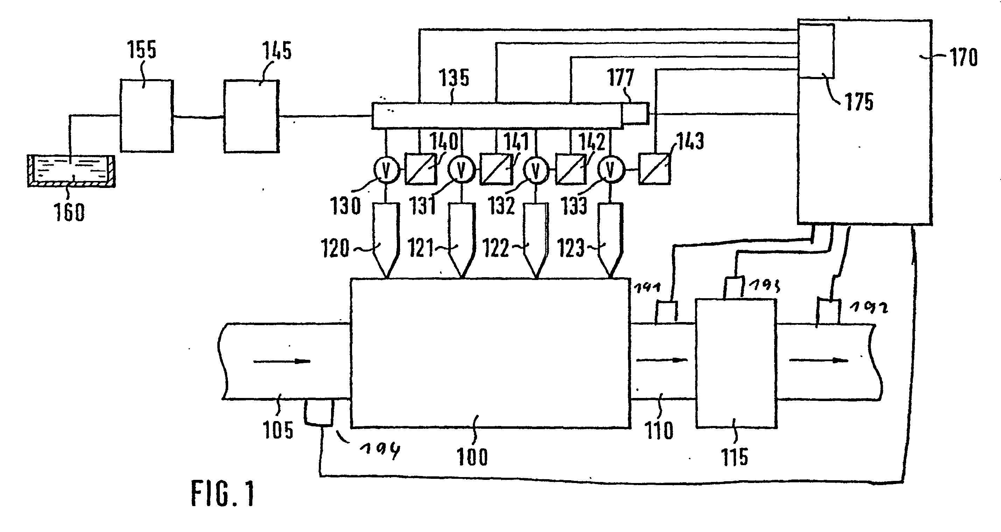

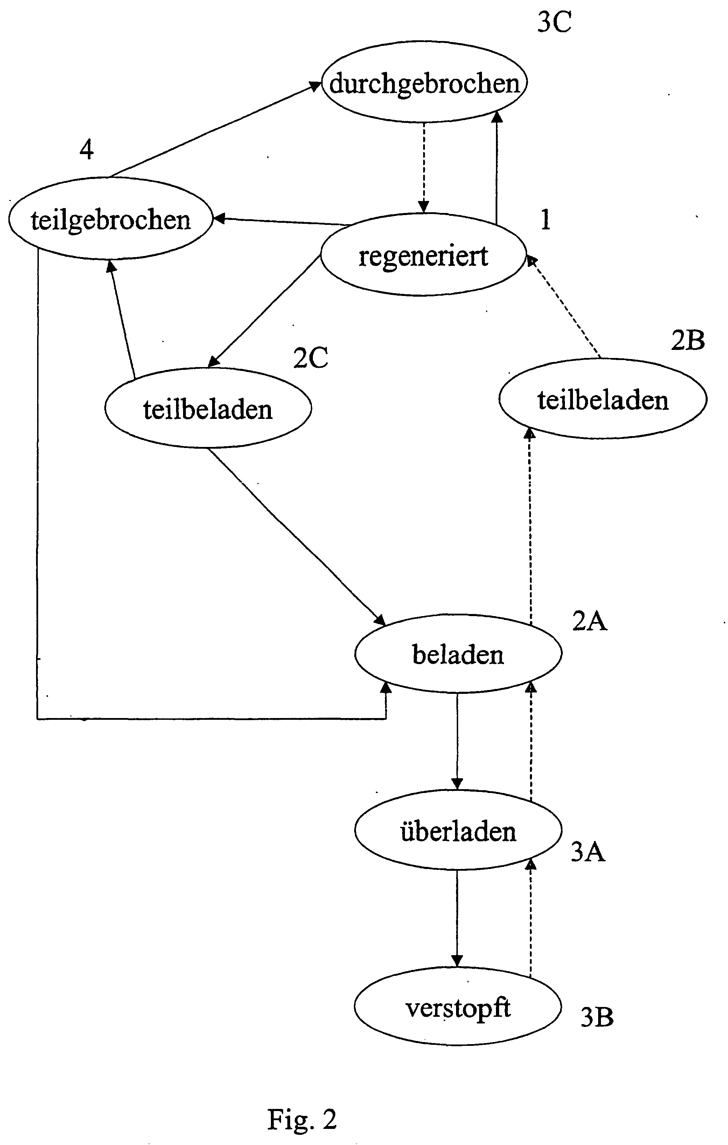

Figur 1 zeigt ein Blockdiagramm eine Vorrichtung, in deren Umfeld ein erfindungsgemäßes Verfahren abläuft und Figur 2 zeigt ein Flussdiagramm eines erfindungsgemäßen Verfahrens.

### Beschreibung der Ausführungsbeispiele

Im folgenden wird die erfindungsgemäße Vorrichtung am Beispiel einer selbstzündenden Brennkraftmaschine dargestellt, bei der die Kraftstoffzumessung mittels eines Magnetventils gesteuert wird. Die in Figur 1 dargestellte Ausführungsform betrifft ein sogenanntes Common-Rail-System. Die erfindungsgemäße Vorgehensweise ist aber nicht auf diese Systeme beschränkt. Sie kann bei anderen fremdgezündeten Brennkraftmaschinen eingesetzt werden.

Mit 100 ist eine Brennkraftmaschine bezeichnet, die über einen Ansaugleitung 105 Frischluft zugeführt bekommt und über eine Abgasleitung 110 Abgase abgibt. In der Abgasleitung 110 ist ein Partikelfilter 115 angeordnet. Der Partikelfilter kann auch als Rußfilter bezeichnet werden.

Bei der dargestellten Brennkraftmaschine handelt es sich um eine Vierzylinderbrennkraftmaschine. Jedem Zylinder der Brennkraftmaschine ist ein Injektor 120, 121, 122 und 123 zugeordnet. Den Injektoren wird über Magnetventile 130, 131, 132 und 133 Kraftstoff zugemessen. Der Kraftstoff gelangt von einem sogenannten Rail 135 über die Injektoren 120, 121, 122 und 123 in die Zylinder der Brennkraftmaschine 100.

Der Kraftstoff in dem Rail 135 wird von einer Hochdruckpumpe 145 auf einen einstellbaren Druck gebracht. Die Hochdruckpumpe 145 ist einer Kraftstofförderpumpe 155 verbunden. Die Kraftstofförderpumpe steht mit einem Kraftstoffvorratsbehälter 160 in Verbindung.

Die Magnetventile 130, 131, 132 und 133 enthalten Spulen 140, 141, 142 und 143, die jeweils mittels einer Endstufe 175 mit Strom beaufschlagt werden können. Die Endstufen 175 sind vorzugsweise in einem Steuergerät 170 angeordnet, das die Spule 152 entsprechend ansteuert.

Desweiteren ist ein Sensor 177 vorgesehen, der den Druck im Rail 135 erfaßt und ein entsprechendes Signal an das Steuergerät 170 leitet. Ferner sind verschiedene Sensoren vorgesehen, die insbesondere den Zustand des Partikelfilters 115 charakterisieren. Diese sind ein Drucksensor 191 vor dem Partikelfilter und ein Drucksensor 192 nach dem Partikelfilter. Vorzugsweise ist vorgesehen, daß ein Differenzdrucksensor verwendet wird, der ein Signal bereitstellt, das die Druckdifferenz zwischen dem Druck vor und dem Druck nach dem Partikelfilter 115 charakterisiert. Ein Temperatursenor 193 liefert ein Signal, das die Temperatur des Partikelfilters kennzeichnet. Ein Sensor 194 liefert ein Signal, daß die Luftmenge charakterisiert, die durch die Brennkraftmaschine und damit auch durch den Partikelfilter strömt.

Dies Einrichtung arbeitet nun wie folgt. Die Kraftstofförderpumpe 155 fördert den Kraftstoff aus dem Vorratsbehälter zur Hochdruckpumpe 145. Die Hochdruckpumpe 145 baut in dem Rail 135 einen vorgebbaren Druck auf. Üblicherweise werden bei Systemen für fremdgezündete Brennkraftmaschinen Druckwerte von etwa 30 bis 100 bar und bei selbstzündenden Brennkraftmaschinen Druckwerte von etwa 1000 bis 2000 bar erzielt.

Durch Bestromen der Spulen 140 bis 143 werden die entsprechenden Magnetventile 130 bis 133 angesteuert. Die Ansteuersignale für die Spulen legen dabei den Einspritzbeginn und das Einspritzende des Kraftstoffs durch die Injektoren 120 bis 123 fest.

Der zugemessene Kraftstoff verbrennt in der Brennkraftmaschine 100, dabei entsteht Abgas, das als unerwünschtes Bestandteil Ruß umfaßt. Diese unverbrannten Bestandteile werden in dem Partikelfilter 115 gesammelt und in bestimmten Betriebszuständen verbrannt.

Erfindungsgemäß werden bei der Steuerung des Abgasnachbehandlungssystems verschiedene Zustände des Abgasnachbehandlungssystems insbesondere des Partikelfilters unterschieden. Die Zustände sind durch wenigstens einen Betriebsparameter definiert. Besonders vorteilhaft ist es, wenn neben dem wenigstens einen Betriebsparameter zusätzlich ein Vorgängerzustand zur Definition herangezogen wird. Das heißt die Zustände unterscheiden sich durch wenigstens einen Betriebsparameter und den Vorgängerzustand. Bei dem Vorgängerzustand handelt es sich um den Zustand, der vor dem letzten Zustandswechsel vorlag. Als Betriebsparameter werden vorzugsweise eine Größe verwendet, die den Differenzdruck zwischen dem Eingang und dem Ausgang des Partikelfilters kennzeichnet. Als weitere Größen werden vorzugsweise die Abgastemperatur und/oder eine Größe, die die Temperatur des Partikelfilters kennzeichnet, berücksichtigt. Abhängig vom Zustand werden unterschiedliche Betriebsprogramme durchgeführt.

In Figur 2 sind die verschiedenen Zustände als Zustandsdiagramm dargestellt. Die verschiedenen Zustände sind dabei als Ellipsen dargestellt. Die möglichen Übergänge von den einzelnen Zuständen sind mit durchgezogenen und mit gestrichelt gezeichneten Pfeilen markiert.

Ein erster Zustand 1 wird als regeneriert bezeichnet. In diesem Zustand ist der Partikelfilter in seinem Grundzustand. Das heißt der Partikelfilter hat keine oder nur sehr wenige Partikel aus dem Abgas ausgefiltert.

In einem zweiten Zustand 2A ist der Partikelfilter beladen. D.h. der Partikelfilter hat einen gewissen Anteil von Partikeln aus dem Abgas ausgefiltert und enthält eine bestimmte Menge von Partikeln. Die Menge an Partikeln ist so groß, daß ein Regenerieren des Partikelfilters erforderlich ist.

Beim Übergang vom beladenen zweiten Zustand 2A des Partikelfilters in den regenerierten ersten Zustand 1 des Partikelfilters wird ein Zustand 2B durchlaufen, der als teilbeladen bezeichnet wird. Ebenso wird beim Übergang von dem regenerierten ersten Zustand 1 in den beladenen zweiten Zustand 2a ein teilbeladenen Zustand 2C durchlaufen. Die teilbeladenen Zustände 2B und 2C unterscheiden sich dadurch, daß der Zustand 2B beim Regenerieren durchlaufen wird. Dies bedeutet dem Zustand 2B ging als Vorgängerzustand der Zustand 2A voraus. Der Zustand 2C wird durchlaufen, wenn das System vom ersten regenerierten Zustand 1 in den zweiten beladenen Zustand 2A übergeht. Dies bedeutet dem Zustand 2C ging als Vorgängerzustand der Zustand 1 voraus.

In einem dritten Zustand 3A ist der Partikelfilter überladen. Der Partikelfilter hat einen zu hohen Anteil an Partikeln aufgenommen. Dieser überladene dritte Zustand tritt vorzugsweise dann ein, wenn im zweiten Zustand 2A eine Regeneration nicht möglich ist. Ist dies längere Zeit nicht möglich bzw. bei auftretenden Fehlfunktionen kann ein weiterer Zustand 3B auftreten, in dem der Partikelfilter verstopft ist.

Der Zustand 3B und weitere Zustände 3C und 4 werden auch als Defekt bezeichnet. Der Zustand 3C wird als durchgebrochen bezeichnet. Dies bedeutet, der Partikelfilter weist einen mechanischen Defekt auf. Dies bedeutet, er kann seine Funktion in der Regel gar nicht bzw. nicht mehr in ausreichendem Umfang erfüllen. Der Zustand 4 teilgebrochen bildet einen Übergangszustand zum Zustand 3C.

Die einzelnen Zustände werden erfindungsgemäß ausgehend von wenigstens einem Wert wenigstens einer Betriebskenngröße unterschieden. Vorzugsweise handelt es sich bei dieser Betriebskenngröße um die Druckdifferenz zwischen dem Druck vor dem Partikelfilter 115 und dem Druck nach dem Partikelfilter. Die beiden Druckwerte werden mit den Sensoren 191 und 192 gemessen. Vorzugsweise kann auch ein Differenzdrucksensor verwendet werden.

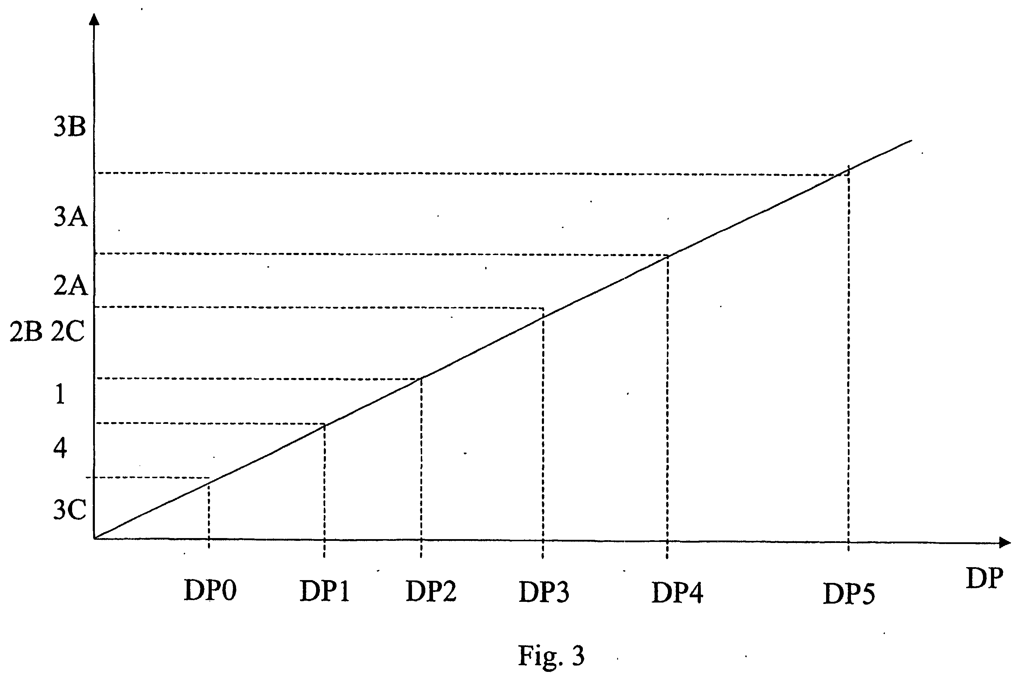

In der Figur 3 sind die Zustände über den Werten für die Druckdifferenz DP aufgetragen. Befindet sich der Partikelfilter in seinem regenerierten ersten Zustand 1, so nimmt die Druckdifferenz Werte zwischen einem ersten Wert DP1 und einem zweiten Wert DP2 an. Zwischen den Werten DP2 und Dp3 werden die teilbeladenen Zustände 2B und 2C erkannt. Ab einem dritten Wert DP3 erreicht der Partikelfilter seinen beladenen Zustand 2A. Überschreitet die Druckdifferenz DP einen vierten Wert DP4, so ist der überladene Zustand 3A erreicht. Ab einem fünften Wert DP5 ist der verstopfte Zustand 3B erreicht. Bei Unterschreiten eines weiteren Wertes DP0, der deutlich kleiner als der erste Wert DP1 ist, wird der durchgebrochene Zustand 3C erkannt. Zwischen den Werten DP0 und DP1 liegt der teilgebrochene Zustand 4 vor.

Als weitere Größe wird das Ausgangssignal des Luftmassenmessers 194 ausgewertet, daß in der Ansaugleitung 105 angeordnet ist. Ferner kann zusätzlich ein Signal des Sensors 193 ausgewertet werden, der ein Signal bereitstellt, daß der Temperatur des Partikelfilters 115 entspricht.

Mit durchgezogenen Pfeilen sind die möglichen Übergänge zwischen den Zuständen aufgetragen, die im Normalbetrieb auftreten. Im Normalbetrieb können unter bestimmten Betriebszuständen Partikelemissionen im Abgas auftreten, die von dem Partikelfilter aus dem Abgas gefiltert werden. Dadurch nimmt der Partikelfilter Partikel auf und geht von seinem regenerierten ersten Zustand 1 im laufe der Zeit in seinen teilbeladenen Zustand 2C, seinen beladen Zustand 2A, den überladenen Zustand 3A oder gar in den verstopften Zustand 3B über. Im Normalbetrieb laufen die Normalbetriebsprogramme ab.

Desweiteren ist es möglich, daß der Partikelfilter aus dem regenerierten Zustand 1 oder aus dem teilbeladenen Zustand 2C in den teilgebrochenen Zustand 4 oder den durchgebrochenen Zustand 3C übergeht. Ferner ist es möglich, daß im Normalbetrieb der Partikelfilter von seinem teilgebrochenen Teilzustand 4 in den durchgebrochenen Zustand 3C bzw. in den beladenen Zustand 2A übergeht.

Ferner sind mit gestrichelten Linien Übergänge zwischen Zuständen aufgetragen, bei denen Sonderbetriebsprogramme durchgeführt werden. Bei den Sonderbetriebsprogrammen wird der Partikelfilter regeneriert. D.h. die in dem Partikelfilter enthaltenen Partikel werden beseitigt. Dies wird dadurch erreicht, daß die Temperatur in dem Partikelfilter durch geeignete Maßnahmen soweit erhöht wird, daß die Partikel verbrannt werden.

Beim Übergang vom zweiten beladenen bzw. teilbeladenen Zustand in den regeneriert ersten Zustand 1 wird üblicherweise ein erstes Sonderbetriebsprogramm durchgeführt. Bei diesem Sonderbetriebsprogramm wird insbesondere die Steuerung der Brennkraftmaschine so beeinflußt, daß sich die Abgastemperatur und damit die Temperatur des Partikelfilters 115 erhöht. Alternativ und/oder ergänzend kann auch vorgesehen sein, daß eine Heizeinrichtung vorgesehen ist, die den Partikelfilter 115 vorzugsweise elektrisch aufheizt.

Vorzugsweise ist vorgesehen, daß die Kraftstoffeinspritzung und/oder die Luftzufuhr der Brennkraftmaschine in Richtung eines Betriebspunktes verstellt wird, in dem der Wirkungsgrad der Brennkraftmaschine sich verschlechtert, das heißt sich eine hohe Abgastemperatur einstellt.

Beim Übergang von den Zuständen 3A und/oder 3B, in denen der Partikelfilter mehr als zulässig beladen ist, wird ein zweites Sonderbetriebsprogramme durchgeführt. Bei diesem Sonderbetriebsprogramm werden neben den Maßnahmen des ersten Sonderbetriebsprogramms noch weitere Maßnahmen zur Erhöhung der Temperatur des Partikelfilters durchgeführt. Das heißt es werden Betriebszustände der Brennkraftmaschine gewählt, bei denen extrem hohe Abgastemperaturen oder die hohe Abgastemperatur sehr schnell erreicht wird.

Insbesondere in dem verstopften Zustand 3B und in dem durchgebrochenen Zustand 3C wird zusätzlich auf die Steuerung der Brennkraftmaschine eingewirkt und oder dem Fahrer ein Fehler angezeigt. Beipielswiese kann vorgesehen sein, daß die Leistungsabgabe der Brennkraftmaschine reduziert wird.

Jedem Übergang von einem Zustand in den anderen Zustand ist jedem Übergang, der durch den Ausgangszustand und einen Zielzustand definiert ist, ist eindeutig ein Sonderbetriebsprogramm oder das Normalbetriebsprogramm zugeordnet. Dabei sind die Möglichkeiten der Übergänge beschränkt, die möglichen Übergänge sind in Figur 2 durch Pfeile gekennzeichnet. Den durchgezogenen Pfeilen ist jeweils das Normalbetriebsprogramm und den gestrichelten Pfeilen ein Sonderbetriebsprogramm zugeordnet.

Dadurch, daß unterschiedliche Zustände unterschieden und beim Übergang von einem Zustand in einen anderen Zustand bestimmte Sonderbetriebsprogramme oder Normalbetriebsprogramme ablaufen, kann die Steuerung deutlich vereinfacht werden. Insbesondere die Applikation kann wesentlich vereinfacht werden, da die Programme deutlich und einfach strukturiert sind.

## Patentansprüche

1. Verfahren zur Steuerung einer Brennkraftmaschine (100), in deren Abgasleitung (110) ein Partikelfilter (115) angeordnet ist, der einen ersten Zustand (1) aufweist, der dem regenerierten Zustand entspricht, und der einen zweiten Zustand (2A) aufweist, der dem beladenen Zustand entspricht, bei dem die Zustände (1, 2A) durch wenigstens einen Wert wenigstens einer Betriebskenngröße (DP) des Partikelfilters (115) unterschieden werden und bei dem beim Übergang vom zweiten in den ersten Zustand (1, 2A) ein erstes Sonderbetriebsprogramm durchgeführt wird, bei dem der Partikelfilter (115) durch Erhöhung der Temperatur des Partikelfilters (115) regeneriert wird, **dadurch gekennzeichnet, dass** beim Übergang vom einem dritten Zustand (3A) des Partikelfilters (115), der dem überladenen, verstopften oder gebrochenen Zustand entspricht, in den zweiten Zustand (2A) ein zweites Sonderbetriebsprogramm durchgeführtwird, bei dem eine gegenüber dem ersten Sonderbetriebsprogramm erhöhte Temperatur des Partikelfilters (115) oder ein schnellerer Anstieg der Temperatur vorgegeben wird.

2. Verfahren nach Anspruch 1, **dadurch gekennzeichnet, dass** beim Übergang vom ersten Zustand (1) in den zweiten Zustand (2A) ein Normalbetriebsprogramm durchgeführt wird, bei dem der Partikelfilter (115) mit Partikeln beladen wird.

3. Verfahren nach Anspruch 1 oder 2, **dadurch gekennzeichnet, dass** es sich bei der Brennkraftmaschine (100) um eine direkteinspritzende Brennkraftmaschine (100) handelt.

4. Verfahren nach einem der vorhergehenden Ansprüche, **dadurch gekennzeichnet, dass** im ersten und/oder zweiten Sonderbetriebsprogramm eine Erhöhung der Abgastemperatur der Brennkraftmaschine (100) vorgesehen wird.

5. Verfahren nach Anspruch 4, **dadurch gekennzeichnet, dass** im zweiten Sonderbetriebsprogramm gegenüber dem ersten Sonderbetriebsprogramm eine erhöhte Abgastemperatur oder ein schnellerer Anstieg der Abgastemperatur vorgesehen wird.

6. Verfahren nach einem der vorhergehenden Ansprüche, **dadurch gekennzeichnet, dass** im zweiten Sonderbetriebsprogramm weiterhin eine Leistungsreduzierung der Brennkraftmaschine (110) vorgesehen und/oder eine Fehleranzeige aktiviert wird.

## Claims

1. Method for controlling an internal combustion engine (100), in the exhaust pipe (110) of which is arranged a particulate filter (115), which has a first state (1), which corresponds to the regenerated state, and which has a second state (2A), which corresponds to the laden state, wherein the states (1, 2A) are differentiated by at least one value of at least one operating characteristic variable (DP) of the particulate filter (115), and wherein during the transition from the second to the first state (1, 2A) a first special operating programme is carried out, in which the particulate filter (115) is regenerated by an increase in the temperature of the particulate filter (115), **characterized in that** during the transition from a third state (3A) of the particulate filter (115), which corresponds to the overloaded, blocked or broken state, to the second state (2A) a second special operating programme is carried out, in which a temperature of the particulate filter (115) which is higher than that of the first special operating programme or a faster rise in the temperature is predetermined.

2. Method according to Claim 1, **characterized in that** during the transition from the first state (1) to the second state (2A) a normal operating programme is carried out, which involves loading of the particulate filter (115) with particulates.

3. Method according to Claim 1 or 2, **characterized in that** the internal combustion engine (100) is a direct-injection internal combustion engine (100).

4. Method according to one of the preceding claims, **characterized in that** an increase in the exhaust-gas temperature of the internal combustion engine (100) is provided for in the first and/or second special operating programme.

5. Method according to Claim 4, **characterized in that** an increased exhaust-gas temperature or a faster rise in the exhaust-gas temperature is provided for in the second special operating programme by comparison with the first special operating programme.

6. Method according to one of the preceding claims, **characterized in that** furthermore a reduction in the power of the internal combustion engine (110) is provided for and/or a fault indication activated in the second special operating programme.

## Revendications

1. Procédé pour la commande d'un moteur à combustion interne (100) dans la conduite de gaz d'échappement (110) dans lequel est disposé un filtre à particules (115) qui présente un premier état (1) correspondant à l'état régénéré, et qui présente un deuxième état (2A) correspondant à l'état chargé, dans lequel les états (1, 2A) diffèrent d'au moins une valeur d'au moins une caractéristique de fonctionnement (DP) du filtre à particules (115) et dans lequel, lors de la transition du deuxième état au premier état (1, 2A), un premier programme de fonctionnement spécial est exécuté, programme dans lequel le filtre à particules (115) est régénéré par élévation de la température du filtre à particules (115),
**caractérisé en ce que**
lors de la transition d'un troisième état (3A) du filtre à particules (115) qui correspond à l'état surchargé, colmaté ou brisé, au deuxième état (2A), un deuxième programme de fonctionnement spécial est exécuté, programme dans lequel est prescrite une température du filtre à particules (115) plus élevée, ou une élévation plus rapide de la température, relativement au premier programme de fonctionnement spécial.

2. Procédé selon la revendication 1,
**caractérisé en ce que**
lors de la transition du premier état (1) au deuxième état (2A) est exécuté un programme de fonctionnement normal dans lequel le filtre à particules (115) se charge de particules.

3. Procédé selon la revendication 1 ou 2,
**caractérisé en ce que**
le moteur à combustion interne (100) est un moteur à combustion interne (100) à injection directe.

4. Procédé selon une des revendications précédentes,
**caractérisé en ce que**
dans le premier et/ou dans le deuxième programme de fonctionnement spécial, est prévue une élévation de la température des gaz d'échappement du moteur à combustion interne (100).

5. Procédé selon la revendication 4,
**caractérisé en ce que**
dans le deuxième état de fonctionnement spécial, il est prévu une température des gaz d'échappement plus élevée ou une élévation plus rapide de la température des gaz d'échappement, relativement au premier programme de fonctionnement spécial.

6. Procédé selon une des revendications précédentes,
**caractérisé en ce que**
dans le deuxième programme de fonctionnement spécial, il est prévu une réduction de puissance du moteur à combustion interne (110) et/ou une signalisation de défaut est activée.
